# EUROPEAN PATENT SPECIFICATION

(11) **EP 2 488 794 B1**
(45) Date of publication and mention of the grant of the patent: **01.07.2015**
(21) Application number: 10782392.4
(22) Date of filing: 14.10.2010
(51) Int. Cl.: F24D 11/02, F24D 17/00, F24D 17/02

(54) **METHOD TO ADD HEAT FROM A WASTE STREAM TO A LIQUID STREAM AND INSTALLATION THEREFOR**
VERFAHREN ZUR ZUFÜHRUNG VON WÄRME AUS EINEM ABFALLSTROM ZU EINEM FLÜSSIGKEITSSTROM UND ANLAGE DAFÜR
PROCÉDÉ POUR APPORTER DE LA CHALEUR ISSUE D'UN COURANT DE DÉCHETS À UN COURANT DE LIQUIDE ET INSTALLATION POUR SA MISE EN OELIGUVRE

(30) Priority: 16.10.2009 BE 200900637
(43) Date of publication of application: 22.08.2012
(73) Proprietor: Chanse, 2820 Bonheiden (BE)
(72) Inventor: FEYTEN, Marc Marie Paul Christian, B-2820 Bonheiden (BE)
(74) Representative: Duyver, Jurgen Martha Herman
(86) International application number: PCT/IB2010/054661
(87) International publication number: WO 2011/045767

(56) References cited:
- DE-A1- 3 102 745
- DE-A1- 3 119 809
- FR-A1- 2 468 851
- GB-A- 2 097 908

## Description

The present invention relates to a method to add heat from a waste stream to a liquid stream corresponding to the first claim and an installation therefore.

Several methods already exist to recover heat from a waste stream and to transfer it to a further liquid stream, the waste stream and the liquid flow having a different temperature. Very often, these known systems use heat exchangers or heat pumps.

Heat exchangers are often used to transfer heat from one stream, such as a waste stream, to a liquid stream. A familiar example is a plate heat exchanger formed by a large number of thin metal *plates in which two liquid streams are sent to adjacent channels. Both streams* are either channeled in concurrent direction or in counter current direction through the heat exchanger and transfer heat along the metal plates to each other. Heat exchangers have the advantage that the heat transfer occurs naturally, and avoid that additional energy has to be brought into the system for the stream to be heated. A certain amount of heat will be transferred through natural conduction from the stream with the highest temperature to the stream with lowest temperature, both streams ultimately reaching a final temperature lying somewhere between the two initial temperatures of the streams. The specific value of the final temperature depends on several factors including the type of heat used, the initial temperature, the specific heat capacity and the flow of both streams, etc.

The advantage of a heat exchanger is that the efficiency of energy transfer is relatively high, given that no additional energy must be brought into the system to achieve warming. On the other hand is the disadvantage of the heat exchanger that a liquid stream can never be heated to a temperature higher than that of the waste stream. This is particularly disadvantageous if the waste stream has a relatively high flow rate compared with the stream to be heated, given that in such a situation only a fraction of the heat from the waste stream can be recovered.

A heat pump on the other hand works according to a different mechanism. A heat pump includes a closed circuit in which a refrigerant is sent sequentially through a compressor, a condenser, a throttle valve and an evaporator. The refrigerant evaporates, compresses, condenses and expands in the closed cycle and transfers in this way heat from the evaporator to the condenser. These are also the positions where the two streams which are to transfer heat to each other are in thermal contact with the circuit. To keep the cycle running, net work must be supplied to the system, for example in the form of electricity required to drive the compressor. The advantage of the heat pump is that heat can be transferred in a relatively efficient way from one waste stream to a liquid stream, even if the waste stream has substantially the same temperature as the liquid stream.

KR20050023108 for example, describes a method for recovering heat from a waste stream. It describes a situation where a water tank located is at a higher level and meets the water needs of a lower place where water is consumed. The water which is discharged after consumption, the waste water, has a higher temperature than the original water from the tank. This sewage is pumped to a heat exchanger where a stream coming from the elevated water tank will preheat. This preheated water can be directed immediately to the place where water is consumed, but could possibly be forwarded to a system with a heat pump where the preheated water will continue to be heated to a further elevated temperature through an external heat source.

Although the method of KR20050023108 is able to recover part of the heat from the waste stream through a heat exchanger, the overall efficiency of the method still relatively low, given that an external heat source is necessary for the preheated water stream to continue to be warmed via the heat pump. One can therefore conclude that the efficiency of the method described in KR20050023108 quite limited.

FR 2 468 851 A1 describes a method to add heat from a waste stream to a liquid stream wherein the liquid stream is first thermally pre-treated by adding a first part of the heat of the waste stream to the liquid stream by means of a heat exchanger. Next heat is added to the pre-treated liquid stream by means of a heat pump, wherein the heat which is released to the liquid stream by means of the heat pump is substantially derived from the second part of the heat of the waste stream.

It is therefore an object of the present invention to develop a method to recover heat from a waste stream at a higher efficiency than existing methods.

This is achieved according to the present invention by a method according to the characterizing part of the first claim.

Thereto, the pre-treated liquid stream is heated with a heat pump using the heat primarily from a second part of the heat from the waste stream.

Such a method combines the use of a heat exchanger with the use of a heat pump more efficiently. Particularly for waste streams with a higher flow rate than the flow rate of the liquid stream to be heated and which thus carries a lot of heat, the combination of heat pump and heat exchanger offers advantages, as the heat of the waste stream which is difficult to recover by means of the heat exchanger by means of the heat pump can be transferred to the liquid stream.

The heat pump also comprises a closed liquid circuit which transfers heat from the waste stream to an evaporator in the heat pump.

Such a process wherein the heat is actually transferred by means of an indirect heat exchanger has the advantage that the waste will not directly contact the evaporator of the heat pump. Evaporators in heat pumps are generally quite difficult to clean. Especially in case the waste stream has a relatively viscous structure, or is a very heterogeneous suspension or emulsion is it advantageous not to bring the waste directly into contact with the evaporator since for such waste streams a very regular cleaning the installation would be necessary. In this case the waste will only come into contact with the indirect heat exchanger which is much easier to clean than a heat exchanger.

The closed liquid system transfers heat from the waste stream to the evaporator in the heat pump by means of an indirect heat exchanger.

The indirect heat exchanger absorbs heat from the waste stream at a heat-receiving position and the closed liquid circuit and releases this heat to the evaporator at a heat release position, other than the heat-receiving position.

In preferred embodiments of the present invention, the closed liquid circuit differs from the liquid circuit connecting a condenser of the heat pump and the evaporator.

The method allows choosing the first part and second part so as to achieve an optimum efficiency in specific situations.

Preferably, the first part of the heat from the waste stream is derived from a first part of the waste stream and the second part of the heat from the waste stream from a second part of the waste stream different from the first part. Such method divides the waste stream into two parts in which a first part flows to a heat exchanger preheating a liquid stream, and a second part flows to a heat pump further heating the preheated liquid stream.

Preferably, a as large as possible part of the waste stream is sent through the heat exchanger, given that the heat transfer in a heat exchanger can occur substantially without external energy supply. At high flow rates of the first partial stream, the preheated liquid stream can reach a temperature close to the initial temperature of the waste stream. In determining the flow rates of the partial streams of the waste stream it will be noted that by the gradually increase of the flow rate of the first partial stream of the waste stream, initially a relatively large increase in heating of the liquid stream is achieved. At some point however, one will find that a large increase in the flow rate of the first partial stream of the waste stream brings about only a slight rise in temperature of the liquid stream. At this point the flow will have reached a temperature which is close to the initial temperature of the waste stream. At that point, the flow rate of the first partial stream of the waste stream is fixed. If the waste stream has an initial temperature Ta, and the liquid stream an initial temperature Tv, the flow of the first stream is preferably selected so that the temperature of the pre-treated liquid flow lies in the interval [Tv 0.60 x (Ta-TV), TV 0.98 x (Tv-Ta)], more preferably in the interval [0.75 x Tv (Tv-Ta) x 0.98 Tv (Tv-Ta)], and most preferably in the interval [0.80 x TV (Ta Tv) x 0.98 Tv (Tv-Ta)]. The second part stream is sent to the heat pump wherein the preheated liquid stream will heat further.

Preferably, a storage volume is available to a store a volume (pre-) treated liquid stream.

Such a storage volume may comprise a vessel or a bulge in a pipe or any other storage volume known in the art and acts as an energy buffer. Such a storage volume has the advantage that sudden increases in the flow of the liquid stream can be compensated if the storage volume is not or only partially filled or that temporarily a higher flow of heated water can be provided than the flow of the liquid stream when the storage volume is partially or fully filled.

The invention will be further elucidated on the basis of the description and the accompanying drawings of preferred embodiments of the invention according to this invention.

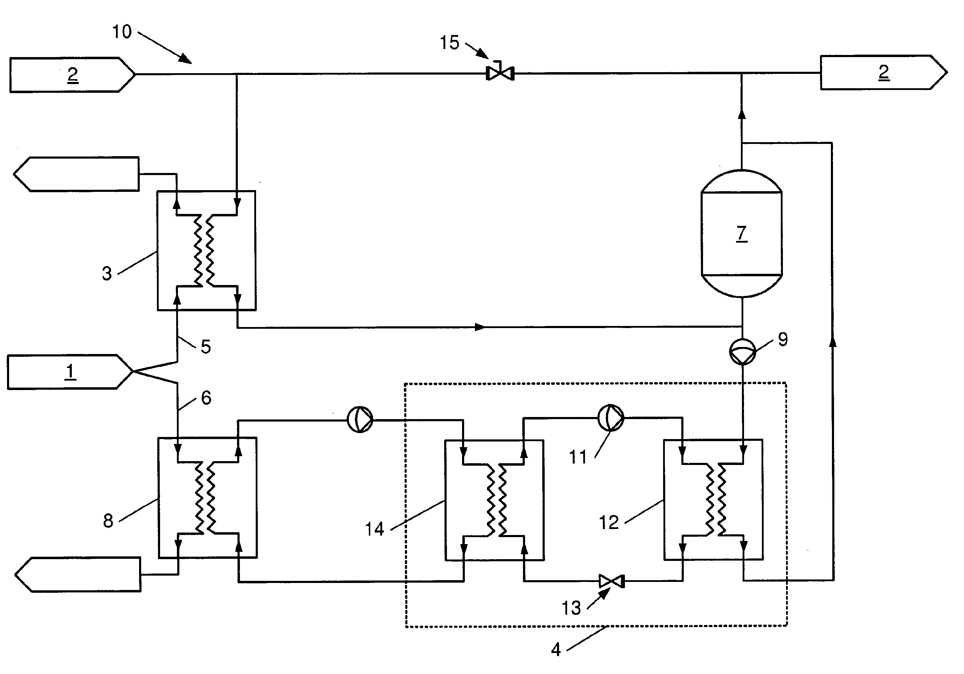

Figure 1 shows a preferred embodiment of an installation according to the method of the present invention.
1. Waste stream
2. Liquid stream
3. Heat exchanger
4. Heat pump
5. First partial stream of the waste stream
6. Second partial stream of the waste stream
7. Storage volume
8. Second heat exchanger
9. Pump
10. Installation to transfer heat from a waste stream to a liquid stream
11. Compressor
12. Condensor
13. Throttle valve
14. Evaporator
15. Valve

The embodiment shown in Figure 1 of an installation 10 for performing a preferred embodiment of the method of the present invention to add heat from a waste stream 1 to a liquid stream 2 comprises two elements, namely a heat exchanger 3 to first pre-treat the liquid stream 2 thermally by adding a first part of the heat from the waste stream 1 to the liquid stream 2 and a heat pump 4 to next add heat to the pre-treated liquid stream 2. The method according to this invention releases therewith heat to the pre-treated liquid stream 2 by means of the heat pump 4 derived from the second part of the heat from the waste stream 1.

In the method shown in Figure 1, the first part of the heat from the waste stream 1 is also derived from a first partial stream 5 of the waste stream 1 and the second part of the heat from the waste stream from a second partial stream 6 of the waste stream, different from the first partial stream 5. In such a process, the main waste stream 1 is therefore divided into two sub-streams 5, 6 flowing to the heat exchanger 3 and 4, respectively.

The waste stream 1, and hence the partial streams of the waste streams 5, 6, consists of any kind of a waste stream 1 known in the art. Waste streams 1 used in such a process, have in general an aqueous base in which wastes and impurities are dissolved, dispersed or mixed. Since water has a relatively high specific heat capacity and thus can carry along a fairly large amount of heat, such waste carries a possible large amount of heat. Obviously, this is not a strict requirement and any other kind of waste stream 1 can also be used. If the waste stream 1 originates from the petrochemical sector, the aqueous nature of the waste will be reduced or even substantially reduced and such a stream can for example also include various types of hydrocarbons. In some cases, the waste stream can also be gaseous. Especially important is that the waste stream 1 can flow without difficulty through the various components of the installation 10 and carry a certain amount of heat with it which can be exchanged in the installation 10.

The liquid stream 2 comprises a process liquid, further used in a given industry and which must undergo a thermal treatment. This thermal treatment can comprise both heating and cooling. A method according to the present invention can, however, in general, be used to heat a liquid stream and in the description of this preferred embodiment only this possibility of heating the liquid stream 2 will further be mentioned. The method and installation shown in Figure 1, are by no means limited hereto and are suitable for cooling a hot liquid stream 2 by heat exchange with a cold waste stream 1 since after all in that case a negative heat is added to the liquid stream 2.

The waste stream 1 preferably has a greater flow rate than the liquid stream 2 and is preferably fully used to heat the liquid stream 2. This is not necessary for the present invention and, in addition to the partial streams of the waste stream 5, 6, a residual stream may exist.

The process liquid, determining the liquid stream 2, can for example comprise water, aqueous solutions, suspensions, emulsions, mixtures, different types of liquid or semi-liquid products used in for example the food, pharmaceutical or petrochemical industry or any other process liquid in industrial use. In some cases, the method and installation 10 can also be used for heat-treating a process gas. In the description of this embodiment of the installation 10 only a process liquid will further be mentioned. Preference is given to pure liquids such as water, because these do not clog the various components of installation 10 as easily as liquids in which solids are present. This has a great advantage because the maintenance costs of the installation 10 are in this case a lot lower. Preferably the process liquid is a liquid with a heat capacity which is about the same as that of the waste stream 1. In one of the most general examples of cold process water to be heated by a hot aqueous waste stream, this is the case. If the liquid stream 2 and the waste stream 1 have a similar specific heat capacity, the liquid stream will undergo a significant rise in temperature through heat exchange according to the present method provided that the temperature difference between the two streams 1, 2 is large enough.

The liquid stream 2 comprising a process liquid will in the method according to the present invention first be thermally pre-treated in the heat exchanger 3. The liquid stream 2 is then pre-heated for example by heat exchange with a warmer partial stream 5 of waste stream 1, as shown in Figure 1. Thereto, both streams run preferably through the heat exchanger 3 in such a way that the contact surface between the two streams is greatly increased so that they are exchanging heat with each other in an optimal way. The heat exchanger 3 itself can be a plate heat exchanger 3 or any other type known in the art. Preferably both streams 5, 2 run in counter current direction through the heat exchanger 3, so as to increase the heat exchange but the method according to the present invention is by no means limited to this.

Preferably, a heat exchanger 3 is used which can be cleaned in a simple way. This is very beneficial if the waste contains a lot of impurities, has a viscous structure, or shows another property which increases the risk of clogging or fouling of the heat exchanger 3. The flow rate difference between two streams which exchange heat in a heat exchanger is preferably in terms of percentage no more than 20% when both streams have a similar heat capacity. Both streams after this treatment will have a temperature between the initial temperatures of both streams. If both streams have next to a similar flow rate also a similar specific heat capacity, the liquid stream 2 will, at best, after pre-treatment in the heat exchanger 3, reach a temperature approaching the initial temperature of the waste stream 1.

Preferably, in dividing the waste stream 1 in a first 5 and the second partial stream 6 at an initial temperature of the waste stream Ta and an initial temperature Tv of the liquid stream 2, the flow rate of the first partial stream 5 is chosen such that the temperature of the pre-treated flow 2 lies in the interval [0.50 x Tv (Tv-Ta) x 0.98 Tv (Tv-Ta)], more preferably in the interval [0.60 x TV (Ta-TV), TV 0, x 1998 (Tv-Ta)], with further preferably in the interval [0.75 x Tv (Tv-Ta) x 0.98 Tv (Tv-Ta)], and most preferably in the interval [0.80 Tv x (Tv-Ta) x 0.98 Tv (Tv-Ta)]. The part of the waste stream 1 which does not flow to the heat exchanger 3, preferably forms the second partial stream 6 and flows further to the heat pump 4. This heat pump 4, can be each heat pump 4 known to the person skilled in the art. The liquid stream 2 arriving at the heat pump 4 has already been thermally pre-treated by heat exchanger 3 and the temperature difference between the two flows will be less significant than in a non-treated liquid stream 2. As mentioned above, a heat pump 4 as opposed to a heat exchanger 3 is especially suited in such a situation to transfer heat from one stream to the other. A heat pump 4 has a closed circuit in which a refrigerant is sent sequentially through a compressor 11, a condenser 12, a throttle 13 and an evaporator 14, as mentioned above. The refrigerant evaporates, compresses, condenses and expands in the closed circuit and will thus transfer heat from the evaporator 14 to the condenser 12. The refrigerant used in heat pump 4, can be a perfluorinated hydrocarbon, an alkane, propylene, ammonia, carbondioxide or any type of refrigerant known to the person skilled in the art. The second partial stream 6 of the waste stream 1 will release heat to the evaporator 14 of the heat pump 4. This heat will then as it were be pumped through the refrigerant in the closed circuit of the heat pump 4, into the condenser 12 where it is transferred to the already heated liquid stream 2 so that a final temperature is reached which is significantly higher than the initial temperature of the liquid stream 2 and in most cases even than the initial temperature of the waste stream 1.

Given the fact that the waste stream 1 often can carry impurities or can have a viscous structure as mentioned above, the heat pump 4 in the method according to the present invention includes a closed liquid circuit which transfers heat from the waste stream 1, preferably from the second partial stream 6, to the evaporator 14 of the heat pump 4. In such embodiments it is not necessary that a second partial stream 6 is present. Through the liquid circuit, the heat is transferred in an indirect way to the evaporator 14 preventing direct contact between the contaminated waste stream and the evaporator 14.

The closed liquid system transfers heat from the waste stream to the evaporator 14 in the heat pump 4 through an indirect heat exchanger, as shown in the figure. The indirect heat exchanger, as shown in the figure, absorbs heat from the waste stream in a heat-receiving position and the closed liquid circuit and releases this heat to the evaporator at a heat release position, other than the heat absorption position. The closed liquid circuit is preferably different from the liquid circuit of a capacitor connecting the heat pump and evaporator, as also shown in the figure.

This closed circuit liquid can be driven by a pump and can comprise any liquid with a sufficiently high heat capacity to transfer heat from the second partial stream 6 of the waste stream to the liquid stream 2. Via a second heat exchanger 8, the heat from the second partial stream 6 can be transferred to the liquid circuit and so the evaporator 14 of the heat pump 4. The main reason why such an indirect heat exchange is used, is that most heat pumps 4, in particular their evaporator 14, are quite difficult to clean. A direct contact between a contaminated waste stream and an evaporator 14 of the heat pump 4 is therefore preferably avoided. A heat exchanger 8, however, is relatively easy to clean and a flow of the second partial stream of the second heat exchanger 8 will also cause few problems. This heat exchanger 8 may be part of the heat pump 4 and being incorporated herein or may be a separate heat exchanger 8 which is connected to the heat pump 4.

Preferably, a storage volume 7 is present in the installation 10 according to the method of the present invention. This storage volume 7, may have the shape of a drum or a bulge in a tube or any type of storage volume 7 which can store part of the liquid stream 2. The storage volume 7 is incorporated in the installation 10 in a manner as shown in Figure 1. The storage volume is preferably always filled with process liquid from the liquid stream 2. The storage volume 7 has as its main function to absorb flow rate fluctuations in the liquid stream 2 and delivering a steady stream of liquid 2 to the condenser 12 of the heat pump 4 so that at any minute heat may run to a stream, so as to ensure its optimal functioning. With declines in the flow rate of the liquid stream2, the liquid stream 2 flowing to the heat pump 2 can be complemented with process liquid present in the storage volume. The liquid stream 2, once it has left the condenser 12, can be once again partially returned to the storage volume 7, raising the temperature of the process liquid in the storage volume. On the other hand, with a sudden increase in the flow rate of the liquid stream 2, a part may be sent to the storage volume in order not to overload the heat pump, provided that the liquid stream 2 which has gone through the heat pump is then once gain complemented with process liquid from the storage volume 7.

Preferably, the system is also provided with a pump 9 to circulate the liquid stream 2. Preferably, the pump 9 is provided before the entrance of the heat pump 4, and preferably, this pump is adjustable. In this way, a constant liquid flow can be provided to the condenser 12 of the heat pump 4 at any time.

Preferably, an additional duct is provided in the installation 10 according to the present process, connecting a duct carrying the liquid stream entering the installation 10 for preheating with a duct through which the heated liquid stream 2 is discharged after heating by the heat pump. Preferably, this duct is provided with a valve 15. If the capacity of the installation 10 to heat the liquid stream 2 is for example, insufficient, or the flow rate of the waste stream is temporarily too low to provide heat to the system, a part of the liquid stream 2 or the full liquid stream 2 can move on through the installation to any further processes. In an optimal situation in which the installation 10 is capable of heating the full liquid stream 2, the valve 15 may simply be partially or fully closed.

Optionally, the heated liquid stream 2 can be further heated by an external heater. This heater can be any heating device known to the person skilled in the art. If the temperature of the waste stream 1 or that of the liquid stream 2 is not constant which will be so in many cases, heat can be added to the liquid stream 2 by an external heater, so as to reach for example a constant final temperature.

The above described first preferred embodiment of the present invention describes the method and installation 10 shown in Figure 1. Here, the first part of the heat from the waste stream is used to thermally pre-treat the liquid stream 2 by means of the heat exchanger 3, derived from a first partial stream 5 of the waste stream 1 and a second part of the heat from the a waste stream is used to further heat the pre-treated liquid stream 2 in the heat pump 4, derived from a second partial stream 6 of the waste stream part 1, different from the first partial stream 5. It is also possible not to divide the waste stream 1 into two partial streams 5, 6 and recover both parts of the heat from one single waste stream 1. In such a case, the waste stream 1 which has gone through the heat exchanger 3 and has already released a part of its heat, flows directly to the heat pump 4 where residual heat from the waste stream 1 is recovered by transfer to the liquid stream 2.

For waste streams 1 with relatively high flow rates as compared with the liquid stream to be heated the first preferred embodiment of the method is however recommended because the waste stream 1 carries with it a larger amount of heat which can be transferred to the liquid stream 2 by using the heat pump 4. The second embodiment is more suitable in situations where the flow rate of the waste stream 1 is not much higher than the flow rate of the liquid stream 2 to be heated. The person skilled in the art is able to choose which method best suited for a specific situation and will be most profitable.

In the installation 10, more specifically in the piping of installation 10, carrying the partial streams 5, 6 of the waste stream 1 and a liquid stream 2, sensors are preferably present, for example flow meters and temperature sensors. Preferably, a processing unit, e.g. a computer, is present in the installation 10 to which the values measured by the sensors can be forwarded. In this way the different components of the installation 10 can at any time be controlled and the overall efficiency of the installation 10 can be calculated. Valve 15 can be used with any other adjustable valves and instruments, such as the compressor 11 of the heat pump 4 and the pump 9, can also be connected to the processing unit. Thus these parts of the installation 10 may be controlled automatically by the processing unit as a function of various parameters measured by the sensors. It also allows the flow rate of the first and second partial streams 5, 6 to be tuned as a function of the measured values, for example using the above control methods for the first and second stream 5, 6.

## Claims

1. Method to add heat from a waste stream (1) to a liquid stream (2) wherein the liquid stream is first thermally pre-treated by adding a first part of the heat of the waste stream (1) to the liquid stream (2) by means of a heat exchanger (3) and next heat is added to the pre-treated liquid stream (2) by means of a heat pump (4), wherein the heat which is released to the liquid stream (2) by means of the heat pump (4) is substantially derived from the second part of the heat of the waste stream (1), the heat pump (4) comprising a closed liquid circuit (8) which transfers heat from the waste stream (1) to an evaporator (14) in the heat pump (4), the closed liquid circuit transferring heat from the waste stream (1) to the evaporator (14) in the heat pump (4) by means of an indirect heat exchanger (8), **characterized in that** the indirect heat exchanger (8) absorbs heat from the waste stream (1) at a heat-receiving position in the closed liquid circuit and releases this heat to the evaporator at a heat release position, other than the heat-receiving position, in the closed liquid circuit.

2. Method according to claim 1, **characterized in that** the closed liquid circuit (8) differs from the liquid circuit connecting a condenser (12) of the heat pump (4) and the evaporator (14).

3. Method according to one of the preceding claims **characterized in that** the first part of the heat from the waste stream (1) is derived from a first partial stream (5) of the waste stream (1) and the second part of the heat from the waste stream is derived from a second partial stream (6) of the waste stream (1) different from the first partial stream (5).

4. Method according to claim 3 **characterized in that** the waste stream (1) has an initial temperature Ta and the liquid stream has an initial temperature Tv and that the flow rate of the first partial stream is chosen such that the temperature of the pre-treated liquid stream lies in the interval [Tv + 0.60 x (Ta-Tv), Tv + 0.98 x (Ta-Tv)], more preferably in the interval [Tv + 0.75 x (Ta-Tv), Tv + 0.98 x (Ta-Tv)].

5. Method according to one of the preceding claims **characterized in that** a storage volume (7) is present to store a volume (pre)treated liquid stream.

6. Installation (10) for executing the method according to one of the preceding claims, wherein the liquid stream is first thermally pre-treated by adding a first part of the heat of the waste stream (1) to the liquid stream (2) by means of a heat exchanger (3) of the installation and next heat is added to the pre-treated liquid stream (2) by means of a heat pump (4) of the installation, wherein the installation is provided such that the heat which is released to the liquid stream (2) by means of the heat pump (4) is substantially derived from the second part of the heat of the waste stream (1), the heat pump (4) comprising a closed liquid circuit (8) which transfers heat from the waste stream (1) to an evaporator (14) in the heat pump (4), the closed liquid circuit transferring heat from the waste stream (1) to the evaporator (14) in the heat pump (4) by means of an indirect heat exchanger (8), **characterized in that** the indirect heat exchanger (8) absorbs heat from the waste stream (1) at a heat-receiving position in the closed liquid circuit and releases this heat to the evaporator at a heat release position, other than the heat-receiving position, in the closed liquid circuit.

## Patentansprüche

1. Verfahren, um Wärme aus einem Abfallstrom (1) zu einem Flüssigkeitsstrom (2) zuzuführen, wobei der Flüssigkeitsstrom zuerst thermisch vorbehandelt wird, indem ein erster Teil der Wärme des Abfallstroms (1) mittels eines Wärmetauschers (3) dem Flüssigkeitsstrom (2) zugeführt wird, und indem dann als Nächstes Wärme mittels einer Wärmepumpe (4) dem vorbehandelten Flüssigkeitsstrom (2) zugeführt wird, wobei die Wärme, die an den Flüssigkeitsstrom (2) mittels der Wärmepumpe (4) abgegeben wird, im Wesentlichen aus dem zweiten Teil der Wärme des Abfallstroms (1) abgeleitet wird, wobei die Wärmepumpe (4) einen geschlossenen Flüssigkeitskreislauf (8) umfasst, der Wärme aus dem Abfallstrom (1) an einen Verdampfer (14) in der Wärmepumpe (4) überträgt, wobei der geschlossene Flüssigkeitskreislauf Wärme aus dem Abfallstrom (1) an den Verdampfer (14) in der Wärmepumpe (4) mittels eines indirekten Wärmetauschers (8) überträgt, **dadurch gekennzeichnet, dass** der indirekte Wärmetauscher (8) in einer Wärmeaufnahmeposition in dem geschlossenen Flüssigkeitskreislauf Wärme aus dem Abfallstrom (1) absorbiert und diese Wärme in einer Wärmeabgabeposition, die eine andere als die Wärmeaufnahmeposition ist, in dem geschlossenen Flüssigkeitskreislauf an den Verdampfer abgibt.

2. Verfahren nach Anspruch 1, **dadurch gekennzeichnet, dass** sich der geschlossene Flüssigkeitskreislauf (8) von dem Flüssigkeitskreislauf, der einen Kondensator (12) der Wärmepumpe (4) und den Verdampfer (14) verbindet, unterscheidet.

3. Verfahren nach einem der vorhergehenden Ansprüche, **dadurch gekennzeichnet, dass** der erste Teil der Wärme aus dem Abfallstrom (1) aus einem ersten Teilstrom (5) des Abfallstroms (1) abgeleitet wird und der zweite Teil der Wärme aus dem Abfallstrom aus einem zweiten Teilstrom (6) des Abfallstroms (1), der ein anderer als der erste Teilstrom (5) ist, abgeleitet wird.

4. Verfahren nach Anspruch 3, **dadurch gekennzeichnet, dass** der Abfallstrom (1) eine Anfangstemperatur Ta aufweist und der Flüssigkeitsstrom eine Anfangstemperatur Tv aufweist und dass der Durchfluss des ersten Teilstroms derart gewählt wird, dass die Temperatur des vorbehandelten Flüssigkeitsstroms in dem Intervall [Tv + 0,60 x (Ta - Tv), Tv + 0,98 x (Ta - Tv)] liegt, stärker bevorzugt in dem Intervall [Tv + 0,75 x (Ta - Tv), Tv + 0,98 x (Ta - Tv)].

5. Verfahren nach einem der vorhergehenden Ansprüche, **dadurch gekennzeichnet, dass** ein Speichervolumen (7) vorhanden ist, um ein Volumen eines (vor)behandelten Flüssigkeitsstroms zu speichern.

6. Anlage (10), um das Verfahren nach einem der vorhergehenden Ansprüche auszuführen, wobei der Flüssigkeitsstrom zuerst thermisch vorbehandelt wird, indem ein erster Teil der Wärme des Abfallstroms (1) mittels eines Wärmetauschers (3) der Anlage dem Flüssigkeitsstrom (2) zugeführt wird, und indem dann als Nächstes Wärme mittels einer Wärmepumpe (4) der Anlage zu dem vorbehandelten Flüssigkeitsstrom (2) zugeführt wird, wobei die Anlage derart ausgestattet ist, dass die Wärme, die an den Flüssigkeitsstrom (2) mittels der Wärmepumpe (4) abgegeben wird, im Wesentlichen aus dem zweiten Teil der Wärme des Abfallstroms (1) abgeleitet wird, wobei die Wärmepumpe (4) einen geschlossenen Flüssigkeitskreislauf (8) umfasst, der Wärme aus dem Abfallstrom (1) an einen Verdampfer (14) in der Wärmepumpe (4) überträgt, wobei der geschlossene Flüssigkeitskreislauf Wärme aus dem Abfallstrom (1) an den Verdampfer (14) in der Wärmepumpe (4) mittels eines indirekten Wärmetauschers (8) überträgt, **dadurch gekennzeichnet, dass** der indirekte Wärmetauscher (8) in einer Wärmeaufnahmeposition in dem geschlossenen Flüssigkeitskreislauf Wärme aus dem Abfallstrom (1) absorbiert und diese Wärme in einer Wärmeabgabeposition, die eine andere als die Wärmeaufnahmeposition ist, in dem geschlossenen Flüssigkeitskreislauf an den Verdampfer abgibt.

## Revendications

1. Procédé pour ajouter de la chaleur provenant d'un courant de déchets (1) à un courant de liquide (2) dans lequel le courant de liquide est tout d'abord prétraité thermiquement en ajoutant une première partie de la chaleur du courant de déchets (1) au courant de liquide (2) au moyen d'un échangeur de chaleur (3) et ensuite de la chaleur est ajoutée au courant de liquide (2) prétraité au moyen d'une pompe à chaleur (4), dans lequel la chaleur qui est libérée à destination du courant de liquide (2) au moyen de la pompe à chaleur (4) est essentiellement tirée de la deuxième partie de la chaleur du courant de déchets (1), la pompe à chaleur (4) comprenant un circuit de liquide fermé (8) qui transfère de la chaleur du courant de déchets (1) à un évaporateur (14) dans la pompe à chaleur (4), le circuit de liquide fermé transférant de la chaleur du courant de déchets (1) à l'évaporateur (14) dans la pompe à chaleur (4) au moyen d'un échangeur de chaleur indirect (8), **caractérisé en ce que** l'échangeur de chaleur indirect (8) absorbe de la chaleur provenant du courant de déchets (1) à un endroit de réception de chaleur dans le circuit de liquide fermé et libère cette chaleur à destination de l'évaporateur à un endroit de libération de chaleur, autre que l'endroit de réception de chaleur, dans le circuit de liquide fermé.

2. Procédé selon la revendication 1, **caractérisé en ce que** le circuit de liquide fermé (8) diffère du circuit de liquide reliant un condenseur (12) de la pompe à chaleur (4) et l'évaporateur (14).

3. Procédé selon l'une quelconque des revendications précédentes, **caractérisé en ce que** la première partie de la chaleur provenant du courant de déchets (1) est tirée d'un premier courant partiel (5) du courant de déchets (1) et la deuxième partie de la chaleur provenant du courant de déchets est tirée d'un deuxième courant partiel (6) du courant de déchets (1) différent du premier courant partiel (5).

4. Procédé selon la revendication 3, **caractérisé en ce que** le courant de déchets (1) a une température initiale Ta et le courant de liquide a une température initiale Tv et **en ce que** le débit du premier courant partiel est choisi de manière que la température du courant de liquide prétraité se situe dans l'intervalle [Tv + 0,60 x (Ta-Tv), Tv + 0,98 x (Ta-Tv)], plus de préférence dans l'intervalle [Tv + 0,75 x (Ta-Tv), Tv + 0,98 x (Ta-Tv)].

5. Procédé selon l'une quelconque des revendications précédentes, **caractérisé en ce qu'**un volume de stockage (7) est présent pour stocker un volume de courant de liquide (pré)traité.

6. Installation (10) pour exécuter le procédé selon l'une quelconque des revendications précédentes, dans laquelle le courant de liquide est tout d'abord prétraité thermiquement en ajoutant une première partie de la chaleur du courant de déchets (1) au courant de liquide (2) au moyen d'un échangeur de chaleur (3) de l'installation et ensuite de la chaleur est ajoutée au courant de liquide (2) prétraité au moyen d'une pompe à chaleur (4) de l'installation, dans laquelle l'installation est prévue de telle sorte que la chaleur qui est libérée à destination du courant de liquide (2) au moyen de la pompe à chaleur (4) est essentiellement tirée de la deuxième partie de la chaleur du courant de déchets (1), la pompe à chaleur (4) comprenant un circuit de liquide fermé (8) qui transfère de la chaleur du courant de déchets (1) à un évaporateur (14) dans la pompe à chaleur (4), le circuit de liquide fermé transférant de la chaleur du courant de déchets (1) à l'évaporateur (14) dans la pompe à chaleur (4) au moyen d'un échangeur de chaleur indirect (8), **caractérisée en ce que** l'échangeur de chaleur indirect (8) absorbe de la chaleur provenant du courant de déchets (1) à un endroit de réception de chaleur dans le circuit de liquide fermé et libère cette chaleur à destination de l'évaporateur à un endroit de libération de chaleur, autre que l'endroit de réception de chaleur, dans le circuit de liquide fermé.
